# EUROPÄISCHE PATENTSCHRIFT

(11) **EP 0 825 527 B1**
(45) Veröffentlichungstag und Bekanntmachung des Hinweises auf die Patenterteilung: **19.01.2000**
(21) Anmeldenummer: 96440065.9
(22) Anmeldetag: 20.08.1996
(51) Int. Cl.: G06F 9/46

(54) **Verfahren zur Unterstützung der Adress-Interaktion zwischen einer ersten und einer zweiten Einheit**
Method for supporting address interaction between two units
Procédé pour l'interaction d'adresses entre deux unités

(43) Veröffentlichungstag der Anmeldung: 25.02.1998
(73) Patentinhaber: ALCATEL, 75008 Paris (FR)
(72) Erfinder: Carre, Laurent, 78960 Voisins-le-Bretonneux (FR)
(74) Vertreter: Kugler, Hermann, Dipl.-Phys.

(56) Entgegenhaltungen:
- IBM TECHNICAL DISCLOSURE BULLETIN, Bd. 35, Nr. 2, 1.Juli 1992, Seiten 489-493, XP000313371 "METHOD FOR UNIVERSAL MAC FRAME ENCODING"
- IBM TECHNICAL DISCLOSURE BULLETIN, Bd. 37, Nr. 4B, 1.April 1994, Seiten 141-144, XP000451202 "METHOD FOR ALGORITHMIC CREATION OF DISTINGUISHED NAMES FOR SNA RESOURCES"

## Beschreibung

Die Erfindung betrifft ein Verfahren zur Unterstützung der Adress-Interaktion zwischen einer ersten Einheit und einer zweiten Einheit, die unterschiedliche Adressierungen mit Adress-Typen in unterschiedlichen Beschreibungssprachen und mit semantisch unterschiedlichen Adress-Werten verwenden, nach dem Oberbegriff von Anspruch 1, eine Rechnereinheit zur Adress-Interaktion zwischen einer ersten und einer zweiten Einheit nach dem Oberbegriff von Anspruch 6 und ein Computersystem nach dem Oberbegriff von Anspruch 7.

Für die softwaremäßige Realisierung von verteilten Computersystemen wird zunehmend die objektorientierte Modellierung als Architekturprinzip verwendet.

Eine solche Software - Architektur eines Computersystems ist die CORBA - Architektur (CORBA = Common Object Request Broker Architecture), die eine bedeutende Komponente der von der Object Management Group (OMG) spezifizierten OSA-Architektur (OSA = Object Service Architecture) ist. Objekte die dieser Spezifikation folgen, im folgenden CORBA-Objekte genannt, sind mittels der Beschreibungssprache CORBA IDL (IDL = interface definition language) spezifiziert. Auch sämtliche Typen eines solchen Objektes, darunter auch der für die Adressierung verwendete Adress-Typ sind in dieser Sprache, also CORBA IDL, spezifiziert.

Für den Bereich des Netzwerkmanagements ist von der OSI (Open System Interconnection) ein Objektmodell standardisiert (Management framework for open systems interconnection, ITU-T Recommendation X.700, 1992). Seine Objekte, die im folgenden OSI-Objekte genannt werden, sind in der Beschreibungssprache ASN.1 (Abstract Syntax Notation) verwendet. Sämtliche Typen eines solchen OSI-Objektes, darunter auch der für die Adressierung verwendete Adress-Typ sind ebenfalls in dieser Sprache, also ASN.1, spezifiziert.

Bei der Adressierungs-Interaktion zwischen OSI-Objekten und CORBA-treten Probleme auf: Die CORBA und die OSI Architektur verwenden unterschiedliche Adressierungs-Konzepte. In einer OSI Architektur wird ein logische Adresse (full distinguish name) zur Adressierung verwendet, in der CORBA-Architektur wird eine physikalischer Adresse zur Adressierung verwendet.

Die Erfindung geht nun von dem üblichen Vorgehen bei der Adressierungs-Interaktion aus: Bei einer Interaktion wird ein in ASN.1 definierter Adress-Typ in einen korrespondierenden IDL Adress-Typ konvertiert, der dann den Adress-Wert unverändert, beispielsweise über eine CORBA Infrastruktur zu einem anderen Objekt überträgt. Wird der korrespondierende CORBA-Adress-Wert benötigt, beispielsweise beim Ziel-Objekt oder bei dem Transport über die CORBA-Infrastruktur, so wird dieser mittels eines zentralen Dienstes ermittelt.

Der Erfindung liegt nun die Aufgabe zugrunde, die Adress-Interaktion zwischen Objekten in einer Objekt-Umgebung mit Objekten zu ermöglichen, die unterschiedliche Adressierungen verwenden.

Diese Aufgabe wird gelöst durch ein Verfahren nach der Lehre von Anspruch 1, durch eine Rechnereinheit nach der Lehre von Anspruch 6 und durch ein Computersystem nach der Lehre von Anspruch 7.

Der Erfindung liegt hierbei der Gedanke zugrunde, bei der Konvertierung eines ersten Adress-Typs mit einem ersten Adress-Wert den ersten Adress-Typ in einen korrespondierenden zweiten Adress-Typ einer anderen Beschreibungssprache zu konvertieren, der nicht dem eigentlichen Ausgangsadress-Typ entspricht, sondern als zusätzlichen Wert den Adress-Wert gemäß der anderen Adressierung enthält. Damit werden in dem zweiten Typ beide Adresswerte transportiert und stehen sowohl beim Transport einer Nachricht mit diesem Typ als auch beim Ziel-Objekt zur Verfügung. An all diesen Stellen ist es nicht mehr notwendig, den zentralen Dienst wegen einer Semantik-Konvertierung anzurufen. Es ist somit nur eine Semantikkonvertierung, nämlich bei der Eintragung des zweiten Wertes in den zweiten Typen notwendig.

Dadurch werden eine große Anzahl Semantik-Konvertierungen gespart und dadurch auch eine Vielzahl von Nachrichten, die mit dem zentralen Semantik-Konvertierungs-Dienst auszutauschen sind. Die Semantik-Konvertierung ist hierbei insbesondere bei Computersystemen mit einer großen Anzahl von Objekten sehr aufwendig. Dadurch wird ein hoher Performance-Gewinn erreicht.

Ein weiterer Vorteil besteht darin, daß sich die Struktur der Applikations-Software verringert. Keine Semantik-Konvertierung ist mehr zu beachten, da diese auf der Ebene der Typkonvertierung durchgeführt wird. Beide Arten von Adressen werden durch eine einziges Konstrukt behandelt. Dadurch ergeben sich Einsparungen an Entwicklungszeit und Entwicklungskosten.

Im Folgenden wird die Erfindung anhand eines Ausführungsbeispiels unter Zuhilfenahme beiliegender Zeichnungen beispielhaft erläutert:

Fig. 1 zeigt eine Blockschaltbild eines erfindungsgemäßen Computersystems.

Fig. 2a zeigt eine funktionelle Darstellung einer ersten Möglichkeit der Interaktion zwischen unterschiedliche spezifizierten Objekten.

Fig. 2b zeigt eine funktionelle Darstellung einer zweiten Möglichkeit der Interaktion zwischen unterschiedliche spezifizierten Objekten.

Fig. 3a zeigt eine funktionelle Darstellung einer dritten Möglichkeit der Interaktion zwischen unterschiedliche spezifizierten Objekten.

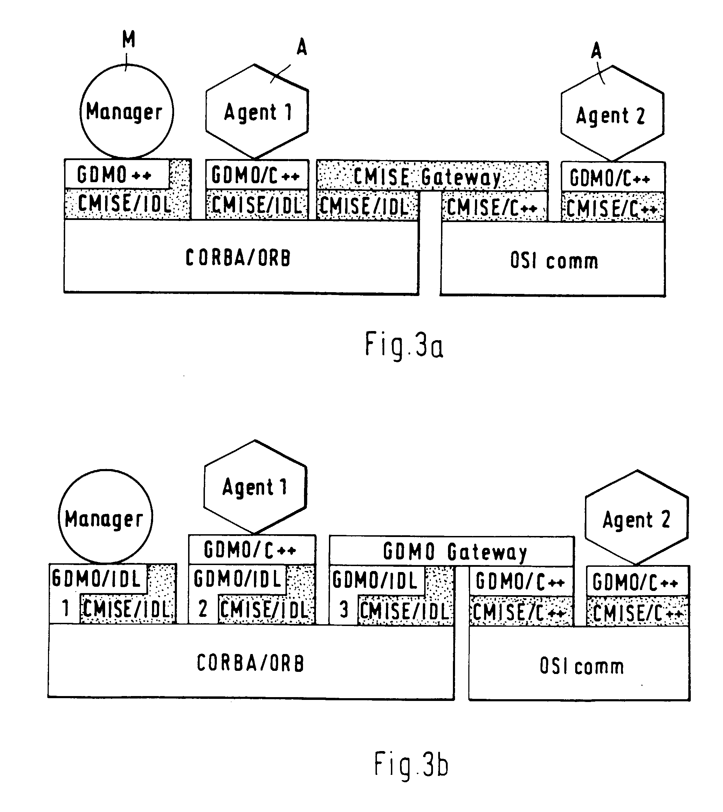

Fig. 3a zeigt eine funktionelle Darstellung einer vierten Möglichkeit der Interaktion zwischen unterschiedliche spezifizierten Objekten.

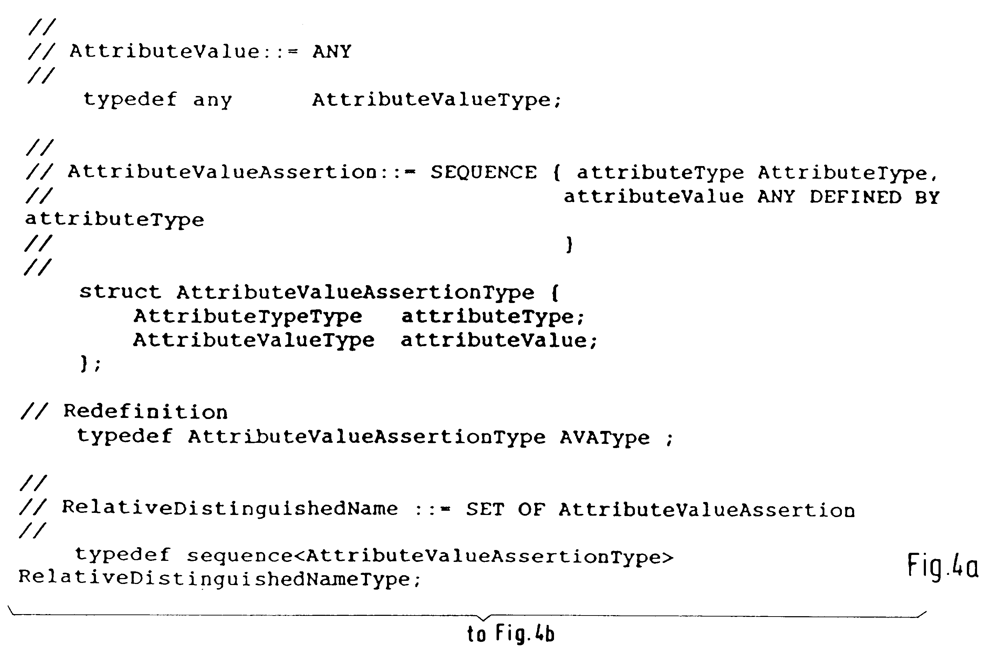

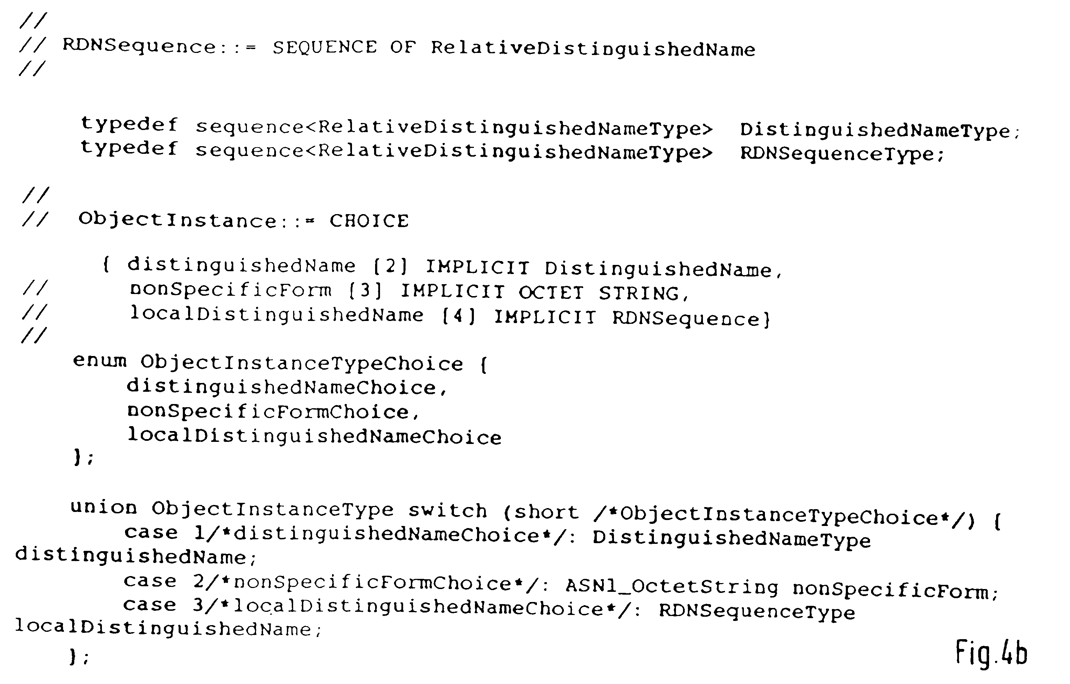

Fig. 4a und Fig. 4b zeigen eine Darstellung einer ersten Typdefinition in einer Beschreibungssprache.

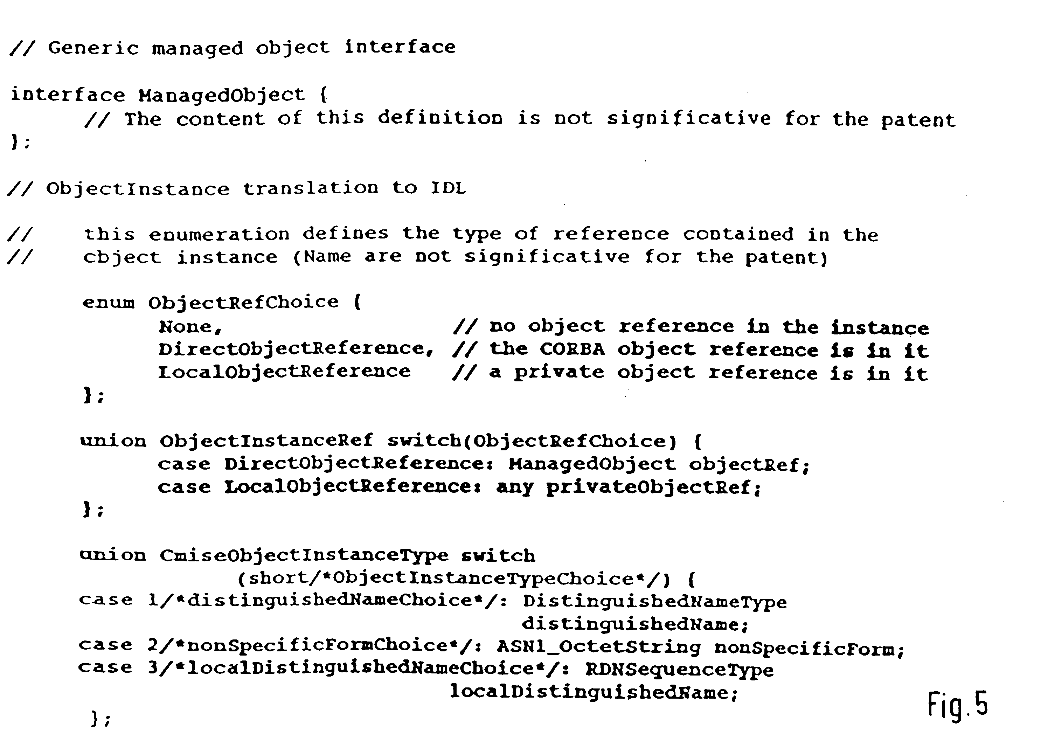

Fig. 5 zeigt eine Darstellung einer zweiten Typdefinition in einer Beschreibungssprache.

In dem Ausführungsbeispiel wird die Durchführung der erfindungsgemäßen Verfahren in einem erfindungsgemäßen Computersystem beschrieben, das aus einem oder aus mehreren erfindungsgemäßen Rechnereinheiten besteht, auf denen jeweils ein oder mehrere Programm-Module ablaufen.

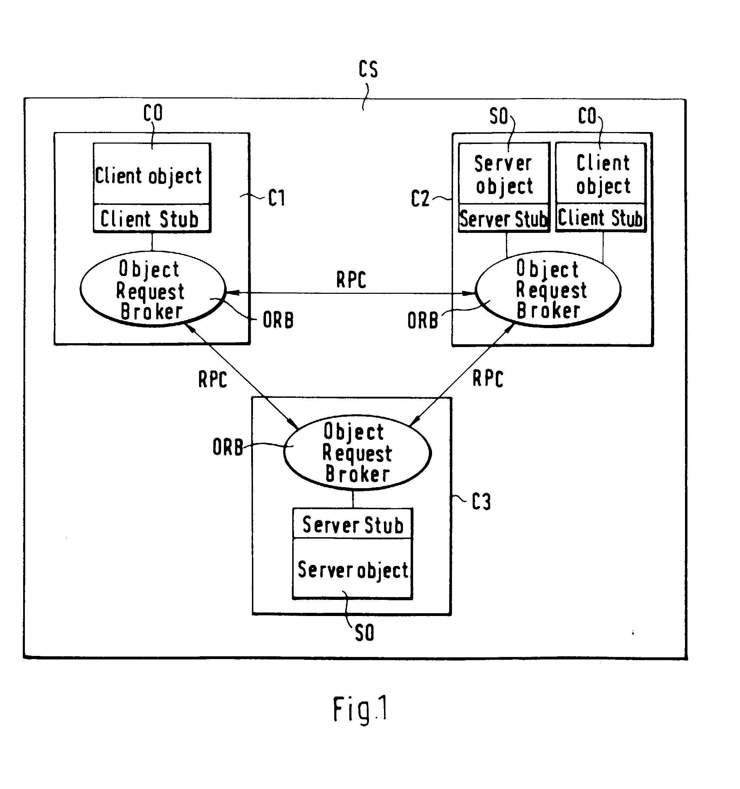

Fig. 1 zeigt ein Computersystem CS mit drei Rechnereinheiten C1 bis C3, die untereinander kommunizieren.

Bei den Rechnereinheiten C1 bis C3 handelt es sich beispielsweise um Computer, Drucker oder um Netzelemente eines Kommunikationsnetzes. Sie weisen jeweils eine Hardware-Plattform, bestehend aus Prozessoren, Speichereinrichtungen und peripheren Komponenten, eine Software-Plattform, die beispielsweise ein Betriebssystem und ein Datenbanksystem umfaßt und Anwendungen auf, die von auf der Software-Plattform ablaufenden Anwendungs-Programm-Modulen gebildet werden. Die Rechnereinheiten C1 bis C3 sind durch ein oder mehrere Kommunikationsnetze untereinander verbunden, beispielsweise durch X.25, #7, Ethernt oder Token-Ring Kommunikationssysteme. Die Software-Plattform der Rechnereinheiten C1 bis C3 stellt hierbei die notwendigen Datenübertragungsdienste bereit.

Die Anwendungs-Programm-Module sind als Objekte (Managed object) modelliert, d. h. der Code und die Daten eines Objektes werden durch eine Summe von Attributen und Funktionen repräsentiert, auf die andere Objekte zugreifen können. Durch das wechselseitige Zugreifen einer Vielzahl solcher Objekte werden sodann die Anwendungsfunktionen des Computersystems CS erbracht.

Gemäß der CORBA-Architektur weisen die Rechnereinheiten C1 bis C3 mehrere Objekte CO und SO und mehrere Objekt-Anforderungs-Broker (Object Request Broker) ORB auf.

Aus der Dienstsicht können die Objekte CO und SO jeweils als eine verkapselte Einheit betrachtet werden, die einen oder mehrere Dienste zur Verfügung stellt, die von einem Klienten (client) angefordert werden können. Die Objekte CO fordern hierbei Dienste an (Client Object), die von den Objekten SO erbracht werden (Server Objects).

Zum Anfordern eines Dienstes sendet ein CO eine Anforderungs-Nachricht (request) an ein SO. Eine solche Anforderungs-Nachricht enthält hierbei folgende Informationen: eine Operation, ein Ziel-Objekt, keinen oder mehrere Parameter und optional einen Anforderungs-Kontext (request context). Nach Erbringen des Dienstes sendet das SO eine Ergebnis-Nachricht (outcome) an das CO zurück, das für diese Anforderungsnachricht definiert ist.

Zum Senden und zum Empfang der Anforderungs- und Ergebnisnachrichten steht den Objekten SO und CO eine Schnittstelleneinheit IU zur Verfügung.

Die Objekt-Anforderungs-Broker (ORB) stellen eine Infrastruktur zur Verfügung, die es den Objekten erlaubt, in einer verteilten Umgebung zu kommunizieren. Für die Objekte CO ist es damit nicht von Bedeutung auf welchem der anderen der Rechnereinheiten C1 bis C3 ein Objekt SO, dessen Dienst sie anfordern wollen, angesiedelt ist und auf welcher speziellen Plattform oder in welchem Implementierungsverfahren das Objekt realisiert ist.

Jedes Objekt kennt hierzu zumindest einen Objekt-Anforderungs-Broker ORB und weiß, wie sie diesen lokalen Objekt-Anforderungs-Broker zu kontaktieren hat. Jeder Objekt-Anforderungs-Broker weiß wie er andere Objekt-Anforderungs-Broker kontaktieren kann und wie er mit ihnen zu kommunizieren hat. Hierfür Verwendet er das RPC-Verfahren (RPC = remote procedure call mechanisms). Ein Objekt sendet somit eine Anforderungsnachricht und einen der Objekt-Anforderungs-Broker ORB, die Weiterreichen der Anforderungsnachricht an das Ziel-Objekt wird durch die von den Objekt-Anforderungs-Broker ORB gebildeten CORBA-Infrastruktur erledigt.

Um über die CORBA-Infrastruktur mittels CORBA-Mechanismen interagieren zu können und mit anderen Objekten auf dieser Infrastruktur zusammenarbeiten zu können, muß jedes der Objekte CO und SO über eine CORBA spezifische Schnittstelle (Interface) verfügen. Ein solche Schnittstelle enthält hierbei eine Beschreibung eines Satzes von möglichen Operationen, die ein anderes Objekt von diesem Objekt anfordern kann. Die Schnittstellen der Objekte sind hierbei in der Beschreibungssprache IDL (Interface Definition Language) definiert, bei der es sich um eine reine Schnittstellen-Beschreibungssprache handelt. Die Vererbung (inheritance) dieser Interfaces erlaubt es, daß ein Objekt mehrere Schnittstellen unterstützt.

In CORBA wird auf ein Objekt direkt über diese CORBA spezifische Schnittstelle zugegriffen. Die Implementierung dieser Schnittstelle ist das Objekt selbst. Es besteht aus Code und Daten und benötigt somit keine Ausführungsinstanz (Agent entity), wie dies der Fall ist, wenn ein Objekt rein durch eine Datenstruktur repräsentiert ist.

Das Computersystem enthält nun neben den Objekten CO und SO weitere Objekte, die nicht in Fig. 1 gezeigt sind. Diese sind nicht in CORBA spezifiziert und interagieren über spezielle Schnittstelleneinheiten über die oben beschriebene CORBA-Infrastruktur untereinander und mit den Objekten CO und SO.

Die Verwendung solcher hybrider Komponenten auf einer CORBA-Infrastruktur hat hierbei den Vorteil, daß bereits bestehende, gemäß einer anderen Objekt-Modell Architektur spezifizierte Objekte wiederverwendet werden können und eine Zusammenarbeit solcher Objekte mit CORBA Objekten ermöglicht wird. Dies hat vor allem im Bereich des Netzwerkmanagement große Vorteile, da in diesem Bereich bereits eine Vielzahl von Objekten bestehen, die gemäß des OSI-Objektmodells spezifiziert sind. OSI-Netzwerkmanagent-Komponenten, beispielsweise Manager, Agent, Mediation Device, werden jeweils von einem oder mehreren solche OSI-Objekte gebildet.

Für den Bereich des Netzwerkmanagements ist von der OSI (Open System Interconnection) ein Objektmodell standardisiert (Management framework for open systems interconnection, ITU-T Recommendation X.700, 1992). Neben dem Objektmodell (SMI = Structure of Management Information) sind auch grundlegende Objekte, ein Set von Management Diensten (CMIS common management information service definition) und ein Netzwerkmanagement-Protokoll (CMIP = Common Management Information Protocol) zur Kommunikation der Objekte untereinander spezifiziert. Objekte sind in der Beschreibungssprache GEMO spezifiziert, die ASN Syntax verwendet und weitere eigene Makros enthält.

Der prinzipielle Unterschied zwischen "natürlichen" CORBA-Objekten und natürlichen*"* OSI-Objekten besteht darin, daß die CORBA Objekte die Implementierung der CORBA-Schnittstelle darstellen, wohingegen die OSI-Objekte eines Netzwerkmanagementelements als Datenstruktur im MIB-Datensatz (Management Information Base) abgelegt sind und durch einen Agenten, mit dem mittels des CEMIP-Protokolls kommuniziert wird, manipuliert werden. Darüberhinaus sind ihre Datentypen in unterschiedlichen Beschreibungssprachen spezifiziert, nämlich in CORBA IDL und in ASN.1 und damit nicht kompatibel.

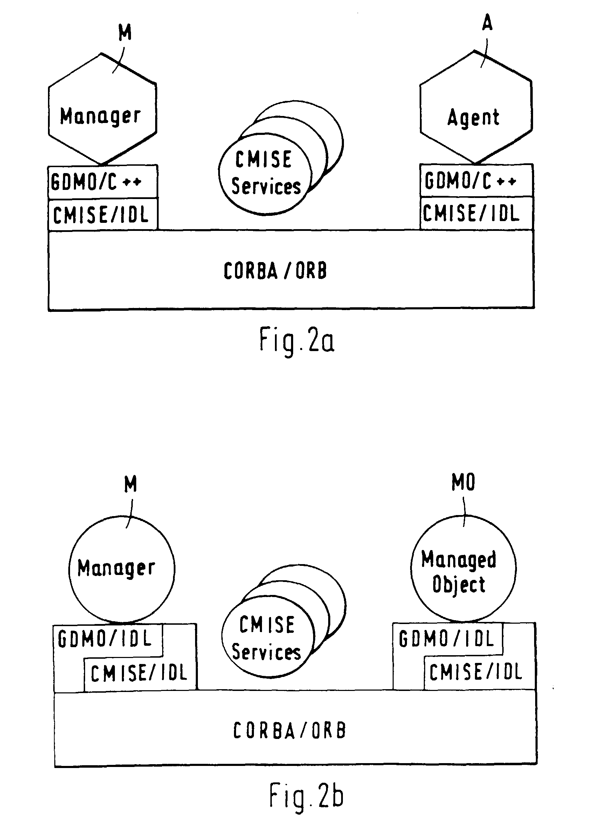

In Fig. 2a, Fig. 2b, Fig. 3a und Fig. 3b sind nun mögliche Implementierungen von OSI Einheiten auf einer CORBA Infrastruktur und gleichzeitig mögliche Arten der Interaktion zwischen CORBA Einheiten und OSI Einheiten über eine CORBA Infrastruktur aufgezeigt. Die Möglichkeit der Interaktion über eine CORBA Infrastruktur impliziert hierbei solch eine Interaktion zwischen Einheiten in unterschiedlicher Spezifizierungssprache. Es erfordert die gleiche Vorgehensweise. Als Einheit wird hierbei ein Gebilde mit einem oder mehreren Objekten betrachtet.

Fig. 2a zeigt eine Kommunikationsschicht CORB/ORB, mehrere über diese Kommunikationsschicht allgemein zur Verfügung stehende Dienste CMISE Services, zwei Netzwerkmanagement-Komponenten M und A und jeweils zwei zwischen diesen Objekten und der Kommunikationsschicht CORB/ORB gelegenen Kommunikationsfunktionen GMO/C++ und CMISE/IDL.

Bei den Komponenten M und A handelt es sich nicht um CORBA-Objekte, sondern jeweils um ein oder mehrere OSI- Objekten OM bzw. OA und eine Manager bzw. Agent Funktionseinheit. Jeder der Komponenten M und A stellt somit eine OSI Einheit dar. Mittels der Agent bzw. Manger Funktionseinheit werden Operationen auf diesen Objekten ausgeführt bzw. Anforderung an andere Objekte versendet. Agent und Manager Funktionseinheit kommunizieren über das CMIP -Protokoll. Aus der Sichtweise des Netzwerkmanagement nimmt die Komponente M die Rolle eines Managers (Manager) und die Komponente A die eines Agenten (Agent) ein.

Die Kommuniktationseinheit GDMO/C++ besteht aus einem oder mehreren speziellen Zugriffs-Objekten, die die Ausführung von CMISE Operationen auf den Objekt OA oder OM ermöglichen.

Die CMISE Management Dienste werden durch ein CMISE-Objekt auf der Seite des Objektes OA realisiert. Die Schnittstelleneinheit CMISE/IDL enthält dieses CMISE-Objekt und die diesem Objekt zugeordneten Dienste. Das CMISE-Objekt der Schnittstelleneinheit CMISE/IDL ist durch ein IDL-Interface spezifiziert ist und agiert und erscheint so nach außen wie ein CORBA-Objekt. Um diese Spezifizierung und damit die Bereitstellung einer CORBA-Schnittstelle zu dem Objekt OA zu ermöglichen, ist eine Typkonvertierung oder Typ-Interoperabiletät von ASN.1 in IDL Typen notwendig. Die Typkonvertierung für die Adress-Typen wird später anhand von Fig. 4a, Fig. 4b und Fig. 5 dargestellt. CMISE-Dienste stellen somit als ein Set von CORBA Objekten zur Verfügung. Durch über die CORBA-Infrastruktur geleitet CORBA-Anforderung können so CMISE-Operationen auf dem Objekt OA ausgeführt werden. Gleiches gilt für das Objekt MO.

Eine zweite Möglichkeit der Anbindung von OSI-Einheiten über eine CORBA-Infrastruktur ist in Fig. 2b aufgezeigt

Fig. 2b zeigt die Kommunikationsschicht CORB/ORB, mehrere über diese Kommunikationsschicht allgemein zur Verfügung stehende Dienste CMISE Services, die Objekte OM und OA und jeweils zwei zwischen diesen Objekten und der Kommunikationsschicht CORB/ORB gelegenen Kommunikationsfunktionen GDMO/IDL und CMISE/IDL

Durch die Schnittstelleneinheit GDMO/IDL werden die in GDMO spezifizierten OSI-Objekte der Komponenten A und M in eine Spezifikation als IDL Schnittstelle übersetzt. Auf ein so spezifiziertes Objekt kann durch klassische CORBA-Nachrichten zugegriffen werden. Jedes dieser OSI-Objekt wird somit in ein reines CORBA Objekt transformiert. Da die Spezifikation in IDL und ASN.1 von unterschiedlicher Natur sind (Schnittstellenbeschreibung <-> Objekt- Spezifikation) ist keine vollkommene Übersetzung möglich und nur ein Untermenge von CMISE-Diensten wird über die Schnittstelleneinheit GDMO/IDL angeboten. Dies bedeutet, daß nur eine Untermenge von CMISE Operationen auf den transformierten CORBA-Objekten ausführbar ist.

In Fig. 3a und Fig. 3b sind weitere Möglichkeiten der Interaktion zwischen Netzwerkmanagement-Komponenten dargestellt, wobei hier ein Gateway GATE eingebunden wird. Die genaue Funktionsweise ergibt sich aus der Darstellung in den Figuren 3a und 3b zusammen mit der Beschreibung der korrespondieren Einheiten, die bereits in der Beschreibung zu den Figuren 2a und 2b gemacht wurde.

Bei der Typ-Konvertierung für die Adressen wird wie folgt beschrieben vorgegangen:

Der ASN-Typ (object instance) eines OSI Adress-Wertes (object instance value) wird in einen korrespondierenden IDL Typen konvertiert, der so strukturiert ist, daß er beides enthält und transportiert: Sowohl den CMIS/OSI full distinguish name, also die logische OSI Adresse, die dem object instance value entspricht, als auch die CORBA object reference, also die physikalische CORBA Adresse. Diese Adresse wird aus dem object instance value mittels einer Semantikkonvertierung, beispielsweise mittels eines zentralen Dienstes ermittelt.

Es ist jedoch auch möglich, daß diese Strukturen, d. h. das object instance value/ object reference Paar für bestimmte Adressen bereits in der Einheit abgespeichert ist und somit nicht von einem zentralen Dienst angefordert werden muß. Dies ist insbesondere für viel verwendete Adressen vorteilhaft, die so "gechached" werden können.

Beide Adressen werden sodann in der Datenstruktur des Typs transportiert und sind so sowohl für den Empfänger als auch für Interims-Einheiten, beispielsweise der CORBA Infrastruktur, verwendbar.

Diese Konvertierung kann zum einen in der sendenden Einheit nach Fig. 2a oder Fig. 2b, aber auch in einem Gateway nach den Fig. 3a oder 3b erfolgen.

Der Mechanismus kann auch in die andere Richtung arbeiten. Wenn z. B. eine object reference über CMIP versendet werden soll, so kann die Einheit oder das Gateway zu der object reference auch den full distinguish name in den aus dem Typ des object reference konvertierten ASN.1 Typ eintragen.

Anstatt des object reference kann in solch einer Struktur, also in solch einem Typ auch ein private object reference eingetragen werden, der den externen Object Brokern nicht bekannt ist.

Fig. 4a und Fig. 4b zeigen eine Beschreibung einer allgemeinen Möglichkeit des Abbildens von ASN.1 auf IDL Daten-Typen. Die Vorgehensweise bei der IDL Übersetzung gemäß Fig. 4a und Fig. 4b wird nun gemäß Fig. 5 verändert. Dadurch gelangt man zu einer erfindungsgemäßen Übersetzung von OSI Adress-Typen in CORBA Adress-Typen.

Es ist hierbei auch möglich, daß man zwei Möglichkeiten der Übersetzung vorsieht, zwischen denen gewählt werden kann:

Zum einen eine Übersetzung, die die volle Spezifikation von CMIP unterstützt und zum anderen ein Übersetzung, die nur dessen wichtigste Varianten berücksichtigt.

## Patentansprüche

1. Verfahren zur Unterstützung der Adress-Interaktion zwischen einer ersten Einheit und einer zweiten Einheit, die jeweils zumindest ein Objekt umfassen und die unterschiedliche Adressierungen mit Adress-Typen in unterschiedlichen Beschreibungssprachen und mit semantisch unterschiedlichen Adress-Werten verwenden, wobei bei dem Verfahren ein Adress-Typ mit einem Adress-Wert gemäß der Adressierung der ersten Einheit in einen korrespondierenden Typ der anderen Beschreibungssprache konvertiert wird,
**dadurch gekennzeichnet**, daß der korrespondierende Typ so konstruiert wird, daß er sowohl den Adress-Wert gemäß der Adressierung der ersten Einheit als auch den Adress-Wert gemäß der Adressierung der zweiten Einheit enthält.

2. Verfahren nach Anspruch 1, dadurch gekennzeichnet, daß der Adress-Wert gemäß der Adressierung der zweiten Einheit aus dem Adress-Wert gemäß der Adressierung der ersten Einheit bestimmt wird und in den korrespondierenden Typ eingetragen wird.

3. Verfahren nach Anspruch 1, dadurch gekennzeichnet, daß zur Interaktion der korrespondierende Typ zur zweiten Einheit übertragen wird.

4. Verfahren nach Anspruch 1, dadurch gekennzeichnet, daß die Adressierung einer der Einheiten als Beschreibungssprache für die Spezifizierung des Adress-Typs ASN.1 verwendet.

5. Verfahren nach Anspruch 1, dadurch gekennzeichnet, daß die Adressierung einer der Einheiten als Beschreibungssprache für die Spezifizierung des Adress-Typs CORBA IDL verwendet.

6. Rechnereinheit mit einem Konverter zur Adress-Interaktion zwischen einer ersten Einheit und einer zweiten Einheit, die so ausgestaltet sind, daß sie jeweils zumindest ein Objekt umfassen und unterschiedliche Adressierungen mit Adress-Typen in unterschiedlichen Beschreibungssprachen und mit semantisch unterschiedlichen Adress-Werten verwenden, wobei der Konverter so ausgestaltet ist, daß er einen Adress-Typ mit einem Adress-Wert gemäß der Adressierung der ersten Einheit in einen korrespondierenden Typ der anderen Beschreibungssprache konvertiert, **dadurch gekennzeichnet**, daß der Konverter so ausgestaltet ist, daß er den korrespondierenden Typ so konstruiert, daß er sowohl den Adress-Wert gemäß der Adressierung der ersten Einheit als auch den Adress-Wert gemäß der Adressierung der zweiten Einheit enthält.

7. Computersystem mit mindestens einer ersten Einheit und mit mindestens einer zweiten Einheit, die so ausgestaltet sind, daß sie jeweils zumindest ein Objekt umfassen und unterschiedliche Adressierungen mit Adress-Typen in unterschiedlichen Beschreibungssprachen und mit semantisch unterschiedlichen Adress-Werten verwenden, und mit mindestens einem Konverter, der so ausgestaltet ist, daß er einen Adress-Typ mit einem Adress-Wert gemäß der Adressierung der ersten Einheit in einen korrespondierenden Typ der anderen Beschreibungssprache konvertiert,
**dadurch gekennzeichnet**, daß der Konverter so ausgestaltet ist, daß er den korrespondierenden Typ so konstruiert, daß er sowohl den Adress-Wert gemäß der Adressierung der ersten Einheit als auch den Adress-Wert gemäß der Adressierung der zweiten Einheit enthält.

8. Computersystem nach Anspruch 7, dadurch gekennzeichnet, daß mindestens eine erste Einheit und eine zweite Einheit so ausgestaltet sind, daß sie miteinander interagieren.

9. Computersystem nach Anspruch 7, dadurch gekennzeichnet, daß mindestens zwei erste Einheiten und eine zweite Einheit so ausgestaltet sind, daß die mindestens zwei ersten Einheiten Transportmechanismen der zweiten Einheit verwenden und über diese interagieren.

10. Computersystem nach Anspruch 7, dadurch gekennzeichnet, daß die erste Einheit eine OSI-Einheit ist.

11. Computersystem nach Anspruch 7, dadurch gekennzeichnet, daß die zweite Einheit eine CORBA-Einheit ist.

## Claims

1. A method of supporting address interaction between a first entity and a second entity each comprising at least one object and using different addressing modes with address types in different specification languages and with address values of different semantics, said method comprising the step of converting an address type with an address value according to the first addressing mode to a correspondent type of the other specification language,
**characterized in** that the correspondent type is so constructed that it contains both the address value according to the addressing mode of the first entity and the address value according to the addressing mode of the second entity.

2. A method as claimed in claim 1, characterized in that the address value according to the second addressing mode is determined from the address value according to the first addressing mode and is entered in the correspondent type.

3. A method as claimed in claim 1, characterized in that for the interaction, the correspondent type is transferred to the second entity.

4. A method as claimed in claim 1, characterized in that the addressing mode of one of the entities uses ASN.1 as the specification language for specifying the address type.

5. A method as claimed in claim 1, characterized in that the addressing mode of one of the entities uses CORBA IDL as the specification language for specifying the address type.

6. A computer entity for address interaction between a first entity and a second entity each comprising at least one object and using different addressing modes with address types in different specification languages and with address values of different semantics, said converter being designed to convert an address type with an address value according to the first addressing mode to a correspondent type of the other specification language,
**characterized in** that the converter is designed to construct the correspondent type in such a way that it contains both the address value according to the addressing mode of the first entity and the address value according to the addressing mode of the second entity.

7. A computer system comprising at least one first entity and at least one second entity each comprising at least one object and using different addressing modes with address types in different specification languages and with address values of different semantics, and further comprising at least one converter designed to convert an address type with an address value according to the first addressing mode to a correspondent type of the other specification language,
**characterized in** that the converter is designed to construct the correspondent type in such a way that it contains both the address value according to the addressing mode of the first entity and the address value according to the addressing mode of the second entity.

8. A computer system as claimed in claim 7,
characterized in that the at least one first entity and the at least one second entity are designed to interact with each other.

9. A computer system as claimed in claim 7,
characterized in that at least two first entities and one second entity are so designed that the at least two first entities use transport mechanisms of the second entity and interact via said transport mechanisms.

10. A computer system as claimed in claim 7,
characterized in that the first entity is an OSI entity.

11. A computer system as claimed in claim 7,
characterized in that the second entity is a CORBA entity.

## Revendications

1. Procédé pour supporter l'interaction d'adresses entre une première unité et une deuxième unité qui comprennent respectivement au moins un objet et qui utilisent des adressages différents avec des types d'adresse dans des langages de description différents et avec des valeurs d'adresse sémantiquement différentes, dans lequel dans le procédé, un type d'adresse avec une valeur d'adresse selon l'adressage de la première unité est converti en un type correspondant de l'autre langage de description, caractérisé en ce que le type correspondant est construit de telle sorte qu'il contient à la fois aussi bien la valeur d'adresse selon l'adressage de la première unité que la valeur d'adresse selon l'adressage de la deuxième unité.

2. Procédé selon la revendication 1, caractérisé en ce que la valeur d'adresse selon l'adressage de la deuxième unité est déterminée à partir de la valeur d'adresse selon l'adressage de la première unité et enregistrée dans le type correspondant.

3. Procédé selon la revendication 1, caractérisé en ce que pour l'interaction, le type correspondant est transmis à la deuxième unité.

4. Procédé selon la revendication 1, caractérisé en ce que l'adressage d'une des unités est utilisé comme langage de description pour la spécification du type d'adresse ASN.1.

5. Procédé selon la revendication 1, caractérisé en ce que l'adressage d'une des unités est utilisé comme langage de description pour la spécification du type d'adresse CORBA IDL.

6. Unité de calcul avec un convertisseur pour l'interaction d'adresses entre une première unité et une deuxième unité, qui sont réalisées de telle sorte qu'elles comprennent respectivement au moins un objet et utilisent des adressages différents avec des types d'adresse dans des langages de description différents et avec des valeurs d'adresse sémantiquement différentes, dans laquelle le convertisseur est réalisé de telle sorte qu'il convertit un type d'adresse avec une valeur d'adresse selon l'adressage de la première unité en un type correspondant de l'autre langage de description, caractérisée en ce que le convertisseur est réalisé de telle sorte qu'il construit le type correspondant de manière à ce qu'il contienne aussi bien la valeur d'adresse selon l'adressage de la première unité que la valeur d'adresse selon l'adressage de la deuxième unité.

7. Système informatique avec au moins une première unité et avec au moins une deuxième unité, qui sont réalisées de telle sorte qu'elles comprennent respectivement au moins un objet et utilisent différents adressages avec des types d'adresse dans des langages de description différents et avec des valeurs d'adresse sémantiquement différentes, et avec au moins un convertisseur qui est réalisé de telle sorte qu'il convertit un type d'adresse avec une valeur d'adresse selon l'adressage de la première unité en un type correspondant de l'autre langage de description, caractérisé en ce que le convertisseur est réalisé de telle sorte qu'il construit le type correspondant de manière à ce qu'il contienne aussi bien la valeur d'adresse selon l'adressage de la première unité que la valeur d'adresse selon l'adressage de la deuxième unité.

8. Système informatique selon la revendication 7, caractérisé en ce qu'au moins une première unité et une deuxième unité sont réalisées de telle sorte qu'elles interagissent.

9. Système informatique selon la revendication 7, caractérisé en ce qu'au moins deux premières unités et une deuxième unité sont réalisées de telle sorte que lesdites au moins deux premières unités utilisent des mécanismes de transport de la deuxième unité et interagissent par l'intermédiaire de ceux-ci.

10. Système informatique selon la revendication 7, caractérisé en ce que la première unité est une unité OSI.

11. Système informatique selon la revendication 7, caractérisé en ce que la deuxième unité est une unité CORBA.
